# EUROPEAN PATENT APPLICATION

(11) **EP 2 302 771 A1**
(43) Date of publication of application: **30.03.2011**
(21) Application number: 10178372.8
(22) Date of filing: 22.09.2010
(51) Int. Cl.: H02K 51/00, B61C 9/24, B63H 23/24, B60L 11/02, B23Q 1/00, B23Q 1/54, B23Q 5/04

(54) **Electric speed changing device for machine tools**

(30) Priority: 23.09.2009 IT MI20091616
(71) Applicant: STS Services S.r.l., 29027 Podenzano (PC) (IT)
(72) Inventor: Lertua, Paolo, 29027, Podenzano (PC) (IT)
(74) Representative: Fisauli, Beatrice A. M.

(57) **Abstract**

The present invention regards an rpm-multiplier or reducer device, and in particular an rpm multiplier or reducer for machines that work by removal of stock, such as machine-tools or the like, comprising a first electrical machine (4, 104), connected to a spindle of a machine-tool, and a second electrical machine (12, 112) to which a tool can be connected, said first and second electrical machines being connected electrically to one another so as to transmit the electric power generated by the first electrical machine (4, 104) to the second electrical machine (12, 112), which sets the tool in rotation, causing the rpm of the tool to vary with respect to that of the spindle of the machine-tool.

## Description

The present invention regards an rpm-multiplier or reducer device, and in particular an rpm multiplier or reducer for machines that work by removal of stock, such as machine-tools or the like.

In detail, the invention regards a removable device to be mounted on the aforesaid machines for carrying out machining operations at a different rpm with respect to that envisaged in the normal use of the machine.

One of the needs that are most felt in the sector of machining operations that are performed with removal of material (milling, turning, reaming, cutting, etc.) is that of having available on the shaft of the spindle to which the tools are connected, both a high torque at a low rpm, which is necessary for the step of rough shaping, in which a large amount of material is removed, and a limited torque at a high rpm, which is necessary in the steps of finishing of the workpiece.

Currently, this need can be met in different ways.

For example, it is possible to use a number of machines, each suitable for performing a given machining step (rough shaping, semifinishing, finishing, etc.), i.e., with a given torque and a given rpm available on the shaft of the spindle.

Alternatively, it is possible to use more complex machines, provided, for example, with devices for automatic change of the machining heads, which can vary radically its own characteristics to adapt to the various steps from roughing to finishing.

Another known solution is represented by machines that are devised to provide compromise performance and that, albeit with major losses in efficiency and also in the quality of machining, manage to cover a number of machining steps.

For example, electrospindles are provided, which are able to supply intermediate torques (hence ones able to carry out limited roughing operations) at a maximum rpm just sufficient for carrying out only some types of finishing operations.

A final solution is constituted by purposely provided removable accessories, to be set alongside or between the tool spindle and the tool, which are able to vary the speed of rotation, and hence the torque, to make available on the spindle or in any case to provide a speed of rotation suitable to enable all the steps of the machining of a piece to be carried out.

The above known systems, however, all present certain disadvantages.

In the first two cases listed, the greatest limitation is represented by the high cost for the purchase of a number of machines or of very complex and sophisticated machines.

In the third case, instead, as already mentioned, the greatest limitation is represented by the compromise between the cost of the machine and the limited efficiency and the quality of machining that it is possible to achieve.

The fourth solution, instead, i.e., that of the removable accessories, comprises two different types of devices each with corresponding disadvantages.

The first type is represented by high-speed electrospindles additionally mounted on the machining head and supplied independently.

The main problem with these devices is the interfacing with the machines on which they are applied.

Said devices in effect require for their operation electrical and hydraulic connections in the working area, corresponding cables and pipes coming from the outside of the machine, connections with the control board of the machine to interface with the commands thereof, and hence modifications of the software dedicated to control.

These systems moreover require long times for installation and removal on/from the head of the machine whenever their use is/is not necessary.

The second type comprises, instead, mechanical rpm multipliers or reducers. These devices are in general removable and can be set between the spindle and the finishing tool when there is the need to change the final speed of rotation of the tool.

A very widespread example of devices of this type are rpm multipliers referred to as "spindle speeders" used on the most common machine-tools for increasing the rpm of the spindle of the machine.

Also these devices present, however, numerous disadvantages, which are for the most common to any mechanical reducer.

In detail, said devices have a decay in efficiency that is all the greater, the higher the rate of rotation, as frequently occurs in finishing operations where the tool turns at rates of rotation higher than 20 000/30 000 rpm.

In effect, the transmission of the motion through sliding and/or meshing members (such as, for example, the teeth of the gears) inevitably involves the development of friction, which is then dissipated in the form of heat (with consequent increase in the temperature that at times can cause deformation of the tool).

A good lubrication contributes to limiting this phenomenon only partially and in any case introduces a further loss caused by "shaking" of the lubricant.

Another disadvantage is represented by the vibrations that inevitably are introduced by the movement between the mechanical parts and that frequently cause chipping of the cutting profile of the tool, causing a fast wear thereof.

On account of said overheating and said vibrations, there hence occurs a fast wear of the mechanical parts (bearings, gears, etc.), which at times occurs even only after a few working hours, on account of the very high rates of rotation.

A further disadvantage of these devices is the fact of envisaging in general a fixed ratio of multiplication or reduction, which, in the case where it is necessary to work with different rates of rotation, forces purchase of a number of multiplier or reducer devices.

The final disadvantage of the known devices regards the marked geometrical constraints; in particular, the positions of the axes of the input shaft and of the output shaft are determined beforehand in the design stage.

Another need present in this sector, namely, in the sector of machine-tools, is in fact that of being able to have available machines that enable working with the tool with different inclinations with respect to the workpiece.

The above need (known to all persons skilled in the sector) arises, in particular, in order to prevent the cutting edge of the tool from possibly coming into contact with the surface of the workpiece with a zero cutting speed.

This problem applies in particular on machine-tools in which the head does not envisage any rotation, i.e., in which the spindle turns about an axis with a fixed direction.

To overcome this problem, recourse is had to the use of devices referred to as "angle heads", in which the axis about which the tool turns is inclined by a certain (fixed or variable) angle, with respect to the directrix or axis of the spindle of the machine.

The above devices, referred to as "angle heads", like the spindle-speeder multipliers described above, are removable and are set in general between the spindle of the machine and the tool.

These devices envisage inside them a series of gears (for example, bevel gears) that are able to displace the output axis of rotation with respect to the input axis of rotation.

In the majority of cases, these devices do not provide any ratio of reduction but are used only to enable change of the position of the axis of rotation of the tool. Consequently, when it is necessary to vary also the speed of rotation of the tool the spindle-speeder multipliers or reducers coupled to these angle-head devices are used.

The disadvantages of the above devices, which also comprise mechanical gears, are substantially the same as the ones already described previously but worsened by the presence of gears with angles of transmission comprised between 45° and 90°.

In this context, the purpose of the present invention is to provide an rpm-multiplier or reducer device that will overcome the drawbacks of the known art referred to above, in particular an rpm-multiplier or reducer device for machines that work by removal of material, such as machine-tools or the like.

In particular, the purpose of the invention is to provide an rpm-multiplier or reducer device that does not require further connections on the machine, with respect to those envisaged for normal tools (mechanical connection and supply of the lubricant), and interfacing devices.

Another purpose of the present invention is to provide an rpm-multiplier or reducer device that will present a high efficiency (even at high rates of rotation) and that will be subject to a very limited wear, and that thus will enable elimination or in any case considerable limitation of the maintenance operations.

A further purpose of the invention is to provide an rpm-multiplier or reducer device that will present minimal and constant vibrations during use of the device to obtain the maximum precision of machining of the tool in the steps of finishing of the workpiece.

A purpose of the present invention is also to provide an rpm-multiplier or reducer device that will make it possible to change also the transmission ratio in a simple way.

Furthermore, a purpose of the invention is to provide an rpm-multiplier or reducer device free from geometrical constraints, so as to be able to set the input and output axes in the most comfortable and convenient position.

The purposes specified above are substantially achieved by an rpm-multiplier or reducer device, in particular for machine-tools, designed to be mounted on a head of a machine-tool comprising:
- at least one first input shaft provided with a first attachment for connection to a spindle of a machine-tool;
- at least one first electrical machine, which functions as current generator comprising a first rotor, mechanically connected to said first shaft, and a first stator part, connected to said head of the machine-tool; and
- a second electrical machine, which functions as motor, comprising a second stator part, connected to said first stator part, a second rotor, and a second output shaft, connected, at one end, to said second rotor and, at the opposite end, to a second attachment, which functions as spindle for connection of a tool;
said first stator part and said second stator part being connected electrically so as to transmit the electric power generated by the first electrical machine to the second electrical machine, which sets the tool in rotation.

According to the invention, by appropriately connecting the first and second electrical machines it is possible to obtain an rpm on the output shaft different from that of the input shaft.

Further characteristics and advantages will emerge more clearly from the illustrative, and hence non-limiting, description of an example of preferred, though non-exclusive, embodiment of the invention, as illustrated in the attached figures in which:
- Figure 1 is a schematic cross-sectional view of an rpm-multiplier or reducer device according to a first embodiment of the invention;
- Figures 2a to 2c are as many schematic views of a detail of the device of Figure 1 in different operating configurations;
- Figure 3 is a cross-sectional view of an rpm-multiplier or reducer device according to a second embodiment of the invention; and
- Figure 4 is a side view of the device of Figure 3.

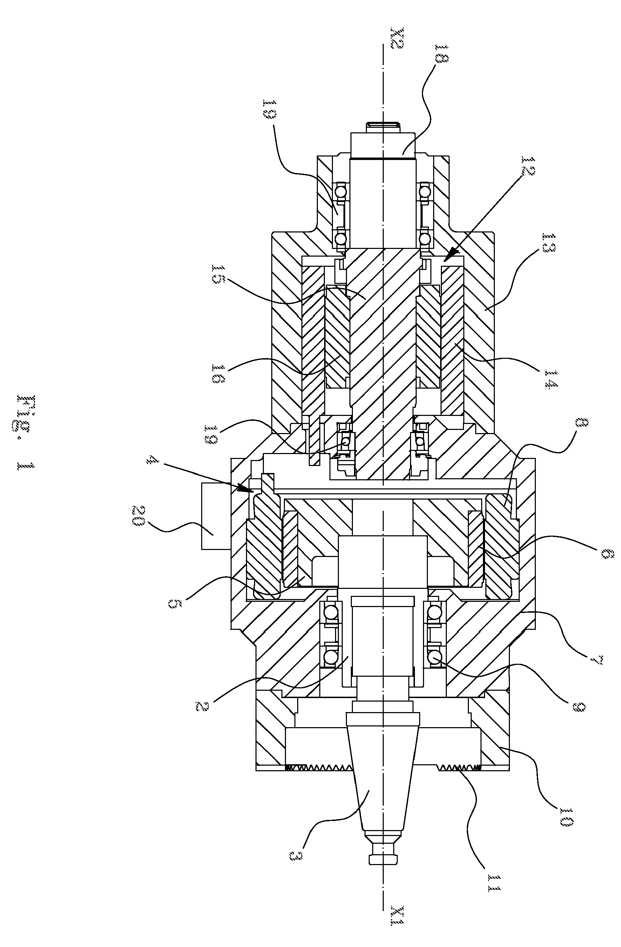

With reference to Figure 1, the multiplier or reducer device, designated as a whole by 1, comprises at least one first input shaft 2, through which the rotary motion is transmitted from the spindle of a machine-tool (not illustrated in the figure).

In detail, provided fixed with respect to said shaft 2 is a first attachment 3 shaped so as to be able to be fixed to the spindle of the machine like a normal tool.

Said shaft 2 is in turn connected to a first electrical machine, designated as a whole by 4, which, receiving at input a mechanical power, functions as current generator supplying at output an electric power.

In detail, said shaft is connected, at one end, to said attachment 3 for the spindle of the machine-tool and, at the opposite end, to a first rotor 5 of said first electrical machine 4.

Preferably, said electrical machine is a permanent-magnet synchronous machine, the permanent magnets 6 of which are fixed with respect to said rotor 5.

Said first electrical machine 4 further comprises a first stator part 7, present inside which is a plurality of first electrical windings designated by 8.

Preferably, said first stator part 7 envisages at least one support 9 (for example, a bearing or the like), fitted on which is said first shaft 2 or said first rotor 5, to keep them constrained axially and enable rotation thereof.

Said stator part 7 can be connected to the head of the machine-tool, or in any case to a fixed part of the machine, via an attachment flange 10 rendered fixed via slotting means 11 or the like to said fixed part.

In detail, said slotting means can be constituted by a toothed flange, designed to couple with a corresponding toothed flange present on the head of the machine-tool (not illustrated in the figure), to provide both an axial and a rotational blocking of said flange.

The first stator part 7, which in turn can be connected to said flange 10 fixedly or else via a joint that enables, for example, a relative rotation between the parts, as will be described more fully hereinafter.

The multiplier or reducer device further comprises a second electrical machine, designated as a whole by 12, which, receiving the electric power coming from the first electrical machine 4, functions as motor for setting the tool of the machine in rotation (not illustrated in the figures).

Said second electrical machine is preferably an asynchronous machine with induced magnetic field.

In detail, said second electrical machine comprises a second stator part 13, located within which are second electrical windings 14.

Said second stator part 13 can be connected to the first stator part 7 fixedly (as illustrated in Figure 1) or else via a joint that enables a relative rotation, as will be described more fully hereinafter.

Housed inside said second stator part 13 is a second output shaft 15, fixedly mounted on which is the second rotor 16 with induced magnetic field of the second electrical machine 12.

In detail, said second shaft 15 is connected at one end to a second attachment 18, which functions as spindle for connection of a tool.

The first attachment 3 and the second attachment 18 can be provided fixed, respectively, with respect to the first and second shafts, or preferably removable so as to be able to be replaced with others of different dimensions to adapt to the various unified dimensions of the spindles and of the tools.

Provided within the second stator part 13 is at least one support, or a pair of supports 19 (bearings or the like), fitted within which is said second shaft 15.

As already mentioned, said first stator part 7 of the first electrical machine 4 and said second stator part 13 of the second electrical machine 15 are connected electrically in order to transmit the electric power generated by the first electrical machine to the second electrical machine, which sets the tool in rotation. According to the invention, said electrical connection is made so as to be able to obtain on the second output shaft 17 a rate of rotation different from that of the input shaft 2.

In detail, the desired transmission ratio between input and output of the device can be obtained by appropriately connecting the polar pairs of the first windings 8 of the first stator part 7 with the polar pairs of the second windings 14 of the second stator part 13.

In effect, as is known, in a current generator that functions in alternating current, the frequency of the current delivered is equal to the half-product of the number of the polar pairs and the revolutions per second of the rotor.

In a.c. motors, instead, the revolutions per second of the rotor is given by the frequency of the supply current divided by the number of polar pairs of the motor, i.e., the number of sets of three (in the case of three-phase systems) that constitute each winding or polar pair.

Consequently, in a device like the one described, with a.c. machines, the transmission ratio is equal to the ratio between the number of polar pairs of the first and second electrical machines.

By appropriately choosing the first and second electrical machines it is thus possible to obtain the desired transmission ratio.

According to the invention, the device thus configured moreover enables variation of the transmission ratio of the device without having to replace the electrical machines.

In effect, by appropriately exploiting the electrical connections between the first and second electrical machines, it is possible to vary the number of real polar pairs thereof.

This can be obtained by connecting in series rather than in parallel a number of polar pairs of the windings of one or both of the electrical machines.

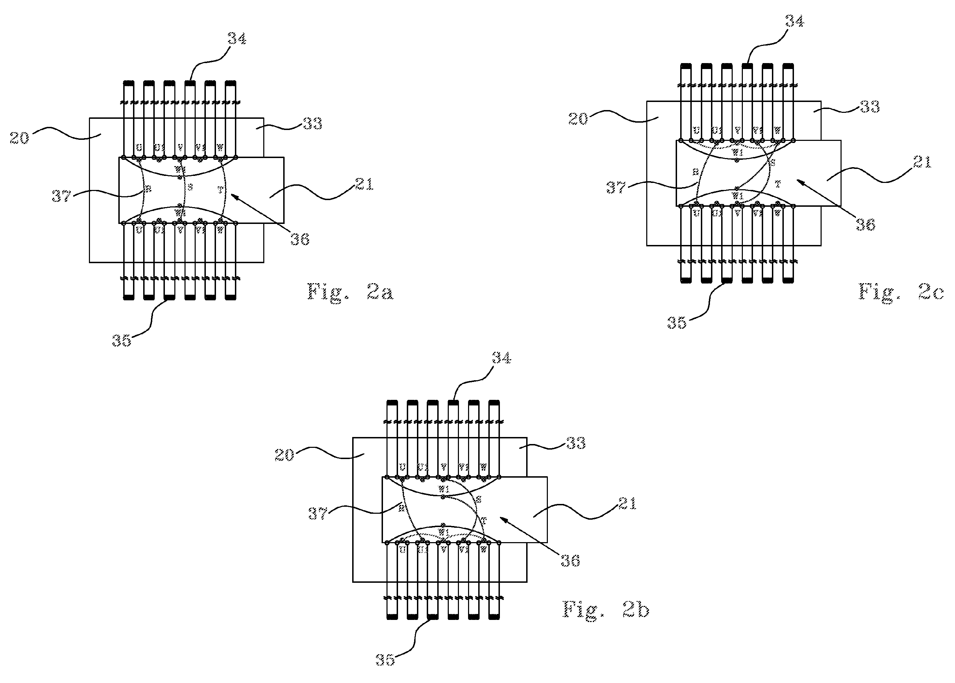

Preferably, for this purpose, according to the invention, the device is provided with a connection bridge 20, illustrated schematically in Figures 2a to 2c, coming under which are the electrical cables 33 connected to each polar pair 34 and 35, respectively, of the first and second stator parts or, rather, of their electrical windings.

To close the circuits and set the first and second stator parts in connection a board 21 is provided, which can be removed from said connection bridge, provided on which is a given circuit 36 for connection of the various polar pairs of the two stator parts of the first and second electrical machines.

Said circuit 36, for example, can be obtained via an appropriate wiring of electrical cables 37 as illustrated in the example in Figure 2.

According to the invention, it is possible to envisage a set of said boards 21, each with a different circuit 36 to provide as many connections corresponding each to a given transmission ratio of the device.

In detail, Figure 2a illustrates a connection circuit 36 that leaves the effective number of polar pairs of the two electrical machines unalterated. In this case, the transmission ratio is defined by the ratio between the number of real polar pairs of the first and second electrical machines.

Figure 2b, instead, illustrates a circuit 36 in which the number of effective poles of the second electrical machine (i.e., the motor) is varies so as to obtain a transmission ratio twice the previous one.

Figure 2c, instead, illustrates a circuit 36 in which the number of effective poles of the first electrical machine (i.e., the generator) is varied to obtain a transmission ratio half that of the first case.

The above are non-limiting examples in so far as, according to the type of machines chosen and the number of real poles of said machines, it is possible to obtain multiplier or reducer devices with a desired range of variation of the transmission ratio.

Alternatively, it is possible to vary the number of effective polar pairs of one or both of the electrical machines by setting between them at least one polarity switch (not illustrated in the figures) of a known type with two or more positions, coming under which are the electrical cables 33 connected, respectively, to the first and second stator parts.

By acting on said switch, it is possible to vary in a simple and fast way the transmission ratio of the multiplier or reducer device.

It is possible to envisage even a number of switches appropriately connected to one another to obtain a number of transmission ratios from the same device with the same electrical machines.

In the case where d.c. electrical machines are used, instead, it is possible to obtain the desired ratio of multiplication or reduction by appropriately choosing the first and second electrical machines.

In effect, for a d.c. generator it is possible to define a voltage factor that results from the fixed ratio between the rpm of the generator and its output voltage.

In d.c. motors the voltage factor is, instead, given by the ratio between the supply voltage of the motor and its rpm.

With this type of machines the transmission ratio is thus equal to the ratio between the voltage factor of the first and of the second electrical machines.

Also in this case it will be possible, with generators and motors appropriately prearranged, to vary the ratio by varying the connections of the windings.

In the example of embodiment illustrated schematically in Figure 1, the axis of rotation X1 of the input shaft 2 and the axis of rotation X2 of the output shaft 15 are parallel and in particular coaxial.

According to the principle of the present invention, it is, however, possible to provide devices in which the two input and output shafts can be positioned also skew with respect to one another.

In effect, thanks to the absence of a mechanical connection between said shafts, the two electrical machines can be located in the most convenient position according to the needs.

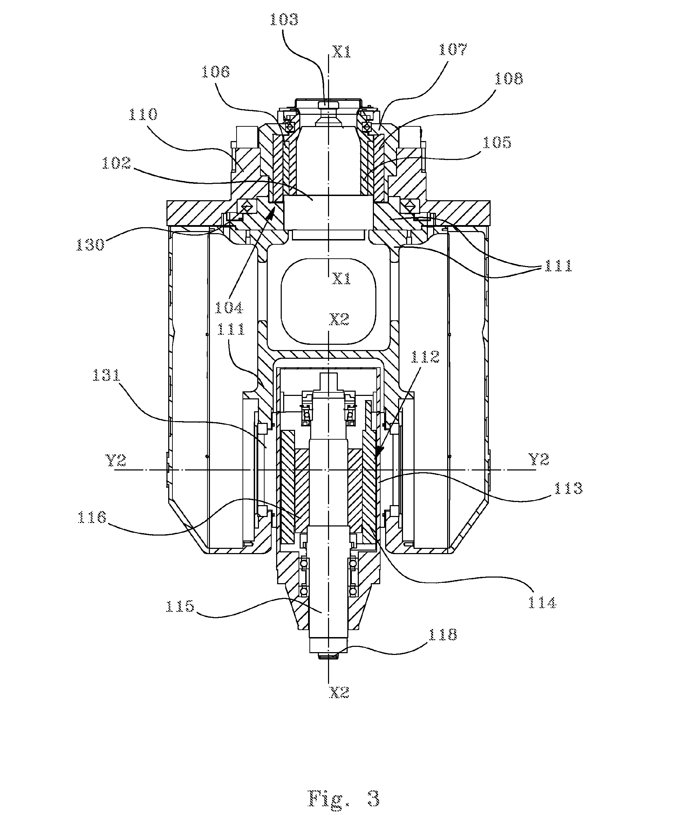

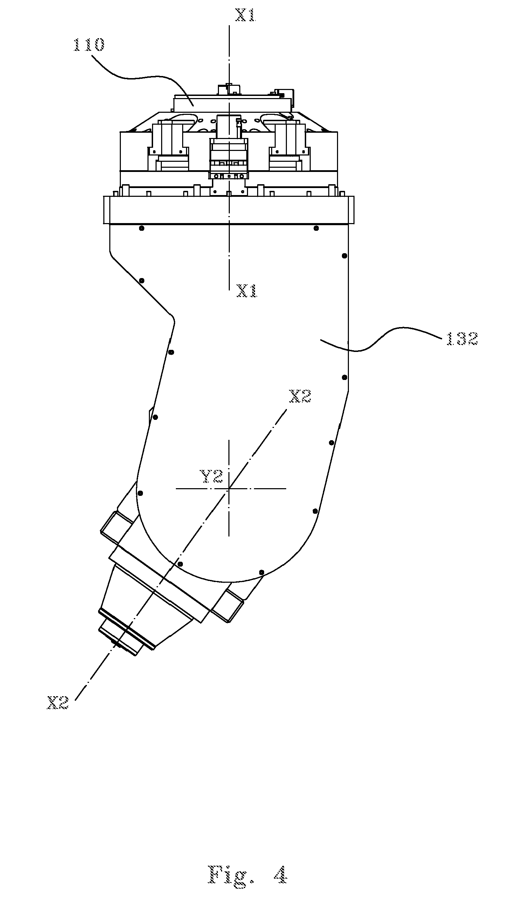

Figures 3 and 4 illustrate a second embodiment of the invention that regards a multiplier or reducer device in which the axis about which the tool turns can vary with respect to the axis of the spindle of the machine.

With reference to Figure 3, the multiplier or reducer device comprises a first electrical machine 104, which functions as generator, and a second electrical machine 112, which functions as motor, as described previously.

In detail, the first electrical machine comprises a first stator part 107, fixed on which are the first electrical windings designated by 108, and within which the rotor 105 provided with the permanent magnets 106 turns.

The rotor 105 is then connected to an input shaft 102 provided with an attachment 103 for connection to the spindle of the machine.

Said first stator part 107 is fixedly connected to the head of the machine-tool, or in any case to a fixed part of the machine, via an attachment flange 110 (Figure 4).

The second electrical machine 112 comprises, instead, a second stator part 113, fixed on which are the electrical windings designated by 114, and within which the second output shaft 115 on which the rotor with induced magnetic field 116 is mounted turns.

According to the present embodiment, said second stator part 113 is connected to the first stator part 107 via a joint 111 that enables said second stator part to move with respect to said first stator part.

In detail, said joint 111 comprises at least one interposed first articulated joint 130 connected to the first stator part 107, which enables the joint itself and the second stator part 113 to rotate about the axis X1 coinciding with the axis of rotation of the spindle.

The joint 111 further comprises a second articulated joint 131, connected to the second stator part 113, which enables said second stator part to rotate about an axis Y2 substantially orthogonal to the axis of rotation of the spindle X1.

Said joint 111 can be made according to the needs; for example, as illustrated in Figures 3 and 4, it can be constituted by a guard 132 for housing the first electrical machine, provided with said articulated joints 130 and 131.

Rotation about said first articulated joint 130 and said second articulated joint 131 can be performed manually or else via appropriately driven electric motors.

In this way, the input axis X1 (which coincides with the axis of rotation of the spindle of the machine) and the output appropriately driven X2 can be parallel to one another (Figure 3), or else skew (Figure 4).

As previously, rotation of the second stator part 113 can be performed manually or else via driven electric motors.

Operation of the device is identical to what has been described previously for the first embodiment.

Thanks to the present invention, it is thus possible to provide an rpm-multiplier or reducer device that can be installed and removed rapidly on/from a spindle of any machine-tool without the need for further connections or other interfacing devices. The rpm-multiplier or reducer device thus configured moreover has an efficiency much higher as compared to mechanical reducers (said efficiency coinciding with that of the electrical machines) even at high rates of rotation (up to 60 000 rpm and beyond).

Thanks to the limited presence of mechanical parts in relative motion, the device is subject to a very limited wear, which enables elimination or in any case considerable limitation of the maintenance operations.

Once again for the same reason, also the vibrations are very limited, enabling greater precision in precision finishing machining operations to be achieved. Thanks to the present invention, it is moreover possible to provide a device that will make it possible to vary in a simple and fast way the transmission ratio, thus enabling use of just one device for a wide range of machining operations.

The use of electrical machines connected to one another via electrical connections moreover enables a device free from geometrical constraints to be obtained, in which it is possible both to vary the position of the input axis and the output axis and to obtain a multiplication or reduction of the rpm, without having to resort to mechanical gears or the like and without repercussions on the efficiency.

The rpm-multiplier or reducer device, as described and illustrated, may undergo numerous modifications and variations, all of which fall within the scope of the inventive idea; moreover, all the items may be replaced by other technically equivalent elements.

## Claims

1. An rpm-multiplier or reducer device, in particular for machine-tools, designed to be mounted on a head of a machine-tool comprising:
- at least one first input shaft (2, 102) provided with a first attachment (3, 103) for connection to a spindle of a machine-tool;
- at least one first electrical machine (4, 104), which functions as current generator comprising a first rotor (5, 105), connected mechanically to said first shaft (2, 102), and a first stator part (7, 107). connected to said machine-tool; and
- a second electrical machine (12, 112), which functions as motor, comprising a second stator part (13, 113), connected to said first stator part (7, 107), a second rotor (16, 116), fixedly mounted on a second output shaft (15, 115), which is in turn connected to one end of a second attachment (18, 118), which functions as spindle for connection of a tool;
said first stator part (7, 107) and said second stator part (13, 113) being electrically connected so as to transmit the electric power generated by the first electrical machine (4, 104) to the second electrical machine (12, 112), which sets the tool in rotation.

2. The rpm-multiplier or reducer device according to Claim 1, **characterized in that** said first stator part (7) is fixedly connected to the head of the machine-tool.

3. The rpm-multiplier or reducer device according to any one of the preceding claims, **characterized in that** said first stator part (7) and said second stator part (13) are fixedly connected.

4. The rpm-multiplier or reducer device according to Claim 1 or Claim 2, **characterized in that** set between said first stator part (107) and said second stator part (113) is a joint (111) that enables said second stator part to rotate about at least one axis (X1) coinciding with the axis of rotation of the spindle of the machine.

5. The rpm-multiplier or reducer device according to Claim 1, Claim 2, or Claim 4, **characterized in that** set between said first stator part (107) and said second stator part (113) is a joint (111) that enables said second stator part to rotate about at least one axis (Y2) substantially orthogonal to the axis of rotation of the spindle of the machine.

6. The rpm-multiplier or reducer device according to any one of the preceding claims, **characterized in that** at least said first electrical machine (4, 104) is a permanent-magnet electrical machine comprising first permanent magnets (6, 106) mounted on the first rotor (5, 105) and first electrical windings (8, 108) mounted on said first stator part (7, 107).

7. The rpm-multiplier or reducer device according to any one of the preceding claims, **characterized in that** at least said second electrical machine (12, 112) is an electrical machine with induced magnetic field comprising a rotor with induced magnetic field (16, 116) mounted on the second output shaft (15, 115) and second electrical windings (14, 114) mounted on said first and second stator parts (13, 113).

8. The rpm-multiplier or reducer device according to any one of the preceding claims, **characterized in that** provided between said first stator part (7, 107) and said second stator part (12, 112) is a connection bridge (20), coming under which are electrical cables (33) connected, respectively, to the first stator part (7, 107) and to the second stator part (13, 113), there being provided a board (21) which can be removed from said connection bridge, provided on which is a connection circuit (35) for connecting said first stator part (7, 107) and said second stator part (12, 112).

9. The rpm-multiplier or reducer device according to any one of the preceding claims, **characterized in that** provided between said first stator part (7, 107) and said second stator part (12, 112) is at least one polarity switch, coming under which are electrical cables (33), connected, respectively, to the first stator part (7, 107) and to the second stator part (13, 113).
